# FASCICULE DE BREVET EUROPEEN

(11) **EP 2 920 243 B1**
(45) Date de publication et mention de la délivrance du brevet: **14.10.2020**
(21) Numéro de dépôt: 13803114.1
(22) Date de dépôt: 08.11.2013
(51) Int. Cl.: C08L 63/00, B29C 70/04, C08L 81/06, C08K 3/08, C08K 3/22

(54) **MATÉRIAU DE COMBLEMENT DE STRUCTURE COMPOSITE**
MATERIAL ZUR FÜLLUNG EINER VERBUNDSTRUKTUR
MATERIAL FOR FILLING A COMPOSITE STRUCTURE

(30) Priorité: 13.11.2012 FR 1260767
(43) Date de publication de la demande: 23.09.2015
(73) Titulaire: Structil, 01120 Dagneux (FR)
(72) Inventeur: COQUILLAT, Baptiste, 91750 Chevannes (FR); VIGNANDO, Pierre, 91490 Dannemois (FR)
(74) Mandataire: Cabinet Beau de Loménie
(86) Numéro de dépôt international: PCT/FR2013/052681
(87) Numéro de publication internationale: WO 2014/076396

(56) Documents cités:
- EP-A2- 0 161 576
- GB-A- 2 342 356
- US-A- 6 045 898
- US-A1- 2012 088 864

## Description

La présente invention a pour objet une composition de résine réticulable solide ductile à température ambiante pour le comblement d'espaces vides dans des structures composites, notamment des structures composites drapées en fibres pré-imprégnées, la composition ayant en particulier la forme de joncs prêts à être incorporés dans les espaces à combler, les structures composites incorporant le jonc de composition réticulée et leur procédé de fabrication.

La composition de résine réticulable solide ductile à température ambiante de la présente invention est plus particulièrement utilisable pour le comblement des espaces vides, aussi appelés têtes de clou, situés entre des raidisseurs de peaux en matériaux composites pour constituer des panneaux autoraidis.

Il est en général recherché des matériaux de comblement présentant des propriétés thermo-mécaniques les plus proches possibles de la structure de la peau composite, afin d'obtenir au final une structure homogène.

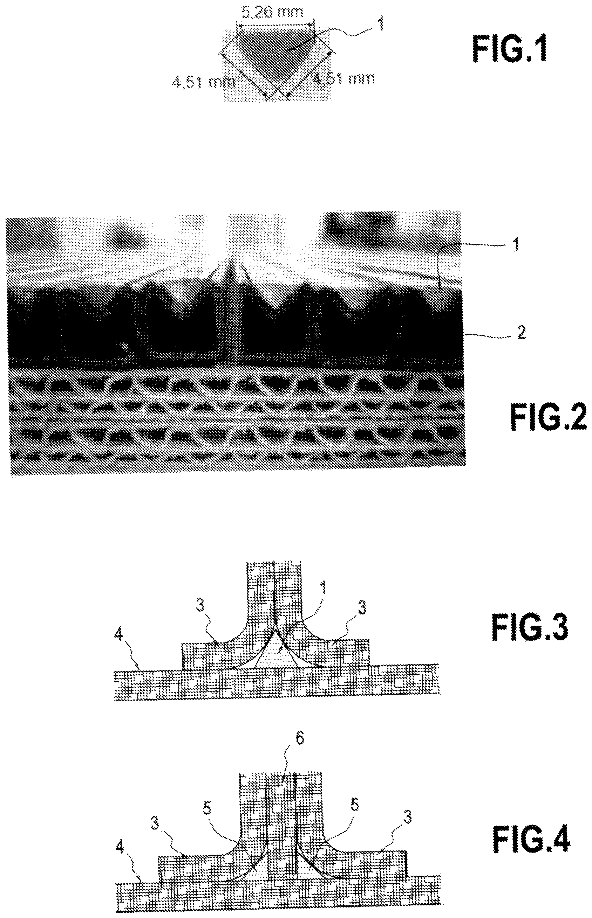

L'utilisation de matériaux de comblement est plus particulièrement décrite dans le cas de structures composites (panneaux, peaux) renforcées au moyen de raidisseurs eux-mêmes en matériau composite, communément appelés panneaux raidis ou autoraidis. Ces panneaux raidis sont en général constitués d'une peau formée généralement d'une pluralité de plis superposés de fibres, avantageusement de fibres de carbone pré-imprégnées, sur l'une des faces de laquelle sont rapportés et disposés côte à côte des raidisseurs, en même matériau que la peau, en forme de U dont les parties de liaisons des branches du U sont plaquées contre ladite peau, avec interposition, entre les branches en regard de deux raidisseurs adjacents, d'une structure d'interfaçage appelée « clou ». La juxtaposition de raidisseurs en forme de U forme donc ainsi une succession de formes de 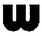 . Il subsiste, en raison du rayon de courbure de la base des U à la base de la jonction de deux U, un espace vide, communément appelé « têtes de clou » qu'il faut combler (voir Figure 3). Selon un autre mode de réalisation, lorsque le raidisseur est formé d'une juxtaposition de UIU, l'espace vide à la jonction des U et I est communément appelé « demi-tête de clou » (voir figure 4).

Les demandes de brevets FR 2 863 198 et FR 2 863 197 décrivent des procédés d'assemblage de matériaux composites utilisant des matériaux de comblement d'espaces vides entre des raidisseurs et une peau. Ces matériaux de comblement sont constitués de cordons de résine de remplissage dont la nature et les caractéristiques ne sont pas décrites.

Selon l'art antérieur décrit dans la demande de brevet WO 2011/0011080, le matériau de comblement peut être constitué de toron de fibres pré-imprégnées. Ce mode de réalisation ne donne pas satisfaction car il ne permet pas un remplissage optimisé de l'espace à combler et conduit à des déformations de la structure composite. En outre le procédé de réalisation de ces profilés présente bien entendu l'inconvénient de devoir modifier les formes des moules de formage en fonction de la géométrie de l'espace à combler.

Il est par ailleurs connu d'introduire des additifs dans des résines de préimprégnation de fibres de carbone afin d'améliorer l'imprégnation de la résine, l'adhésivité et/ou la drapabilité et/ou les propriétés mécaniques des pré-imprégnés. Le brevet US 6045898 décrit ainsi des résines de type époxy de préimprégnation comprenant des additifs telles des résines thermoplastiques et/ou des résines thermoplastiques élastomères comportant éventuellement un groupe fonctionnel réactif avec la résine époxy, des caoutchoucs solubles dans la résine, des particules solides organiques ou inorganiques, tels du talc, du silicate d'aluminium, de la silice, du carbonate de calcium, de l'alumine hydratée. Ces additifs sont introduits à un taux inférieur à 10%, et ont donc pour finalité d'améliorer l'imprégnation des fibres par la résine, l'adhésivité, la drapabilité des pré-imprégnés et les propriétés mécaniques des structures composites. La résine chargée ainsi obtenue garde donc son aspect liquide (afin de pouvoir imprégner les fibres de carbone) et ne peut donc pas servir de matériau de comblement puisqu'elle ne pourrait pas être maintenue sans couler dans l'espace à combler.

En outre il est connu d'après la demande de brevet GB2342356 une composition comprenant une résine époxyde (A), un agent de réticulation de la résine époxyde (B), un polyéthersulphone (C) et une charge inorganique (D). Il est indiqué dans ce document que la charge inorganique peut être constituée par de la silice, de l'oxyde de titane, de l'alumine et similaire. Toutefois tous les exemples sont réalisés avec de la silice. En outre cette composition est en général utilisée sous forme de feuilles de films dans des matériaux d'isolation. La forme d'un jonc n'est donc pas enseignée par ce document et l'utilisation en tant que tête de clou ou demi tête de clou dans des composites n'est pas suggérée ou décrit par ce document. En outre ce document n'enseigne pas la teneur précise d'additifs qui permettrait de pouvoir utiliser la composition décrite sous forme de joncs dans des composites.

L'homme du métier est donc toujours à la recherche d'un matériau de comblement, à géométrie modulable, compatible avec la structure composite, présentant des propriétés de cuisson et mécaniques proches de celles de la structure.

Les inventeurs ont découvert qu'il était possible de résoudre les problèmes de l'art antérieur en utilisant une composition de résine réticulable solide ductile à température ambiante, une telle composition permettant le comblement, notamment de tête de clou ou de demi-tête de clou de panneaux raidisseurs, et pouvant prendre la forme de jonc à géométrie adaptée à la structure à combler.

La présente invention concerne donc une composition de résine réticulable solide ductile à température ambiante comprenant :
- (A) une résine réticulable liquide à une température comprise entre 60 et 70°C, avantageusement d'environ 70°C;
- (B) un agent de réticulation éventuel ; et
- (C) des additifs, lesdits additifs comprenant :
   - (C1) une charge métallique solide sous forme de poudre;
   - (C2) un thermoplastique ;
   - (C3) un extenseur de chaîne éventuel pouvant réagir avec la résine (A) ;
   - (C4) éventuellement des particules ou fibres non métalliques organiques ou inorganiques ;
les additifs (C) représentant entre 20 et 55 % en masse de la composition, avantageusement entre 30 et 50 % en masse, de façon avantageuse entre 40 et 50 % en masse, en particulier entre 41 et 47% en masse.

On entend au sens de la présente invention par « température ambiante » une température d'environ 18 à 25°C, en particulier 20°C.

On entend au sens de la présente invention par le terme « solide ductile à température ambiante», un solide qui peut se déformer plastiquement à température ambiante sans se casser, par exemple par simple pression des doigts, et qui garde la déformation ainsi obtenue sans couler par gravité à température ambiante. Il peut donc être modelé à la main (manuellement) à température ambiante.

Selon la résine utilisée (A), un agent de réticulation (B) est présent ou non. En effet, certaine résines n'ont pas besoin d'agent de réticulation pour réticuler. Elles réticulent spontanément une fois la température de réticulation atteinte. C'est le cas par exemple des résines phénoliques. D'autres résines en revanche ont besoin d'un agent de réticulation pour réticuler à la température de réticulation ; c'est le cas par exemple des résines époxy.

Dans un mode réalisation avantageux, la composition de résine réticulable solide ductile à température ambiante selon la présente invention comprend en masse par rapport à la masse totale de la composition :
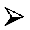 dans le cas où l'agent de réticulation (B) est présent, tel que par exemple dans le cas où la résine (A) est une résine époxy :
   - entre 44 et 71 % de résine réticulable (A), avantageusement entre 47 et 63 %, de façon avantageuse entre 46 et 54 %, en particulier entre 48 et 54 %;
   - entre 1 et 9 % de l'agent de réticulation (B), avantageusement entre 3 et 7 % de façon avantageuse entre 4 et 6 %; en particulier entre 4,5 et 6% et
   - entre 20 et 55 % des additifs (C), avantageusement entre 30 et 50 % de façon avantageuse entre 40 et 50 %, en particulier entre 41 et 47%.
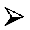 dans le cas où l'agent de réticulation (B) est absent, tel que par exemple dans le cas où la résine (A) est une résine phénolique :
   - entre 45 et 80 % de résine réticulable (A) liquide à température ambiante, avantageusement entre 50 et 70 %, de façon avantageuse entre 50 et 60 %, en particulier entre 53 et 59%;
   - entre 20 et 55 % des additifs (C), avantageusement entre 30 et 50 % de façon avantageuse entre 40 et 50 %, en particulier entre 41 et 47%.

La résine réticulable (A) et son agent de réticulation (B) éventuel sont avantageusement choisis à l'identique de ceux du matériau composite constituant la structure composite dont les espaces vides sont à combler. Ainsi, la composition de résine réticulable solide ductile à température ambiante selon la présente invention peut être réticulée simultanément à la réticulation de la structure composite.

Avantageusement, la résine réticulable (A) est choisie parmi les résines époxy, furaniques ou phénoliques. Dans le cas d'une résine époxy, l'agent de réticulation (B) est obligatoirement présent dans la composition selon la présente invention. Dans le cas d'une résine phénolique, l'agent de réticulation (B) est absent de la composition selon la présente invention. De façon avantageuse il s'agit d'une résine époxy et l'agent de réticulation (B) est présent dans la composition selon la présente invention.

La résine époxy peut être une résine époxy ayant comme précurseur une amine, un phénol ou un composé avec une double liaison carbone-carbone. Il peut s'agir d'une résine époxy monofonctionnelle ou multifonctionnelle, en particulier bifonctionnelle, trifonctionnelle ou tétrafonctionnelle, de façon avantageuse tétrafonctionnelle. En effet les résines tétrafonctionnelles présentent une bonne tenue en température et un réseau plus dense.

Une résine monofonctionnelle correspond à une résine présentant un seul groupe époxy dans la molécule. Une résine multifonctionnelle présente plusieurs groupes époxy dans la molécule. Ainsi, une résine bifonctionnelle présente deux groupes époxy dans la molécule, une résine trifonctionnelle trois groupes époxy et une résine tétrafonctionnelle quatre groupes époxy.

Les résines époxy avec comme précurseur une amine peuvent être choisies parmi les résines époxy de type glycidylamine telles que les résines tri ou tétrafonctionnelles suivantes : le tétraglycidyl diaminophénylméthane, le triglycidyl-p-aminophénol et le triglycidyl aminocrésol. Le tétraglycidyl diaminophénylméthane est particulièrement avantageux en raison de ses excellentes propriétés de résistance thermique et sera avantageusement utilisé dans le cadre de la présente invention. En effet il s'agit d'une résine tétrafonctionnelle. Ce type de résine est commercialement disponible auprès de la société Huntsman sous le nom commercial Araldite®, tel que par exemple Araldite® MY-9512.

Les résines époxy avec comme précurseur un phénol peuvent être tous les types de résine époxy de bisphénol A, de bisphénol F, de bisphénol S, de phénol novolak, de crésol novolak et de résorcinol. En particulier il peut s'agir de résines bifonctionnelles de type résine époxy de bisphénol A, de bisphénol F ou de bisphénol S ou des résines tri ou tétrafonctionnelles de type résine époxy de phénol novolak, de crésol novolak ou de résorcinol. Les résines époxy avec un squelette naphtalène sont intéressantes puisque la résine réticulée obtenue a une forte résistance à la chaleur et absorbe faiblement l'eau. Ce sont en générale des résines bifonctionnelles. De plus, les résines époxy de type biphényle, dicyclopentadiène et diphénylfluorène peuvent aussi être utilisables puisqu'après réticulation, la résine absorbe faiblement l'eau. Ce sont également en générale des résines bifonctionnelles.

Les résines époxy peuvent également être du type glycidyl éther tels que le tétrakis(glycidyloxyphényl)éthane ou le tris(glycidyloxy)méthane. Il s'agit en générale de résines tri ou tétrafonctionnelle.

Les résines époxy peuvent être utilisées seules ou dans toute combinaison appropriée. Il est par exemple possible d'utiliser ensemble une résine époxy bifonctionnelle et une résine époxy tri ou tétrafonctionnelle de façon à améliorer encore la résistance thermique. En particulier la résine est utilisée seule et avantageusement il s'agit d'une résine tétrafonctionnelle. Dans tous les cas la résine époxy utilisée doit être liquide à la température d'extrusion (entre 60 et 80°C, avantageusement environ 70°C). En particulier, elle est liquide à température ambiante.

Le composant (B) est un agent de réticulation. Sa présence dans la composition selon la présente invention dépend de la résine réticulable utilisée (A). En tant qu'agent de réticulation, tout composé ayant un groupement actif capable de réagir avec la résine réticulable (A), en particulier avec le groupe époxy lorsque cette résine est une résine époxy, peut être utilisé. De préférence, pour réagir avec une résine époxy, des composés ayant un groupe amino, tels que les amines aromatiques, ou les amines aliphatiques, un groupe anhydride d'acide ou un groupe azido sont appropriés. Il peut s'agir par exemple des différents isomères du dicyandiamide, diaminodiphénylméthane et diaminodiphenylsulfone, des aminobenzoates, de différents anhydrides d'acide, des résines phénol novolak, des résines crésol novolak, des composés polyphénols, des dérivés imidazole, des amines aliphatiques, de la tetraméthylguanidine, des adduits thiourée-amine, des anhydrides carboxyliques tels que anhydride méthylhexahydrophthalique, des hydrazides d'acide carboxylique, des amides d'acide carboxylique, des polymercaptan et des complexes acide de Lewis tels que le complexe éthylamine trifluorure de bore . Avantageusement on utilisera dans le cas où la résine réticulable (A) est une résine époxy un agent de réticulation comportant un groupe amino tel que par exemple le dicyandiamide. Il peut s'agir en particulier du dicyandiamide commercialisé par la société Alzchem sous la dénomination Dyhard® 100S.

Les additifs (C) sont introduits au total pour 20% à 55% en masse par rapport à la masse totale de la composition et ont pour fonction de modifier les caractéristiques de la résine réticulable (A) pour lui donner une consistance de solide ductile à température ambiante. La teneur d'additifs entre 20 et 55% en masse de la composition est très importante. En effet en dessous de 20% en masse, la composition n'a pas suffisamment de tenue pour pouvoir préparer des joncs utilisables comme tête de clou ou demi-tête de clous dans les composites selon la présente invention. La résine obtenue est en effet trop fluide. En revanche au-delà de 55% en poids, la résine n'est plus assez fluide et il devient difficile de réaliser une incorporation homogène des additifs. En outre elle devient presque impossible à extruder pour lui donner la forme de joncs selon la présente invention.

Selon la résine réticulable (A) utilisée, l'extenseur de chaine (C3) est présent ou non. En effet, certaine résines n'ont pas besoin d'extenseur de chaine pour accélérer la réaction de réticulation. Elles réticulent spontanément une fois la température de réticulation atteinte. C'est le cas par exemple des résines phénoliques. D'autres résines en revanche ont besoin d'un extenseur de chaine pour accélérer la réaction de réticulation et améliorer les caractéristiques mécaniques de la résine réticulée obtenue; c'est le cas par exemple des résines époxy.

Avantageusement les additifs (C) de la composition de résine réticulable solide ductile à température ambiante selon la présente invention comprennent en masse par rapport à la masse totale de la composition :
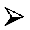 dans le cas où l'extenseur de chaine (C3) est présent, tel que par exemple dans le cas où la résine (A) est une résine époxy :
   - entre 14 et 35 % de la charge métallique (C1), avantageusement entre 21 et 30 %, de façon avantageuse entre 23 et 29 % ;
   - entre 5 et 17 % du thermoplastique (C2), avantageusement entre 7 et 15 %, de façon avantageuse entre 8 et 14 %;
   - entre 1 et 13 % de l'extenseur de chaîne (C3) pouvant réagir avec la résine (A), avantageusement entre 2 et 10 %, de façon avantageuse entre 3 et 8 %;
   - entre 0 et 10 % des particules ou fibres non métalliques organiques ou inorganiques (C4), avantageusement entre 0 et 6 %, de façon avantageuse entre 0 et 5 %;
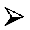 dans le cas où l'extenseur de chaîne (C3) est absent, tel que par exemple dans le cas où la résine (A) est une résine phénolique :
   - entre 14 et 35 % de la charge métallique (C1), avantageusement entre 21 et 30 %, de façon avantageuse entre 23 et 29 % ;
   - entre 6 et 30 % du thermoplastique (C2), avantageusement entre 9 et 25 %, de façon avantageuse entre 11 et 22 %;
   - entre 0 et 10 % des particules ou fibres non métalliques organiques ou inorganiques (C4), avantageusement entre 0 et 6 %, de façon avantageuse entre 0 et 5 %.

De façon avantageuse la résine réticulable (A) est une résine époxy et l'extenseur de chaine (C3) est présent dans la composition selon la présente invention. De façon particulièrement avantageuse la résine réticulable (A) est une résine époxy et l'extenseur de chaine (C3) et l'agent de réticulation (B) sont présents dans la composition selon la présente invention.

Le premier additif (C1) est constitué d'au moins une charge métallique solide sous forme de poudre. Avantageusement il est choisi parmi la poudre d'aluminium, de zinc, de cuivre, d'argent, de fer, de titane, leurs oxydes ou hydroxydes et leurs mélanges. En particulier, il est choisi parmi la poudre d'aluminium, de zinc, de cuivre, d'argent, de fer, de titane et leurs mélanges, avantageusement il s'agit de la poudre d'aluminium. La poudre d'aluminium peut être pure ou peut contenir des traces d'autres métaux en une teneur ne dépassant pas 0,5 % en masse. Ces autres métaux peuvent de façon avantageuse être choisis parmi le fer, la silice, le titane et leurs mélanges, avantageusement parmi le fer, la silice ou leurs mélanges, en particulier il s'agit d'un mélange de fer et de silice. Avantageusement il s'agit de la poudre d'aluminium atomisée commercialisée par ALCOA (catégorie 1233).

La granulométrie de ladite charge métallique (C1) est comprise entre 1µm et 100 µm, avantageusement entre 20 µm et 50 µm, de façon avantageuse entre 20 et 35 µm mesurée par le Microtrac Laser Scattering. En particulier avantageusement le D10 est compris entre 10 et 13µm, le D50 entre 24 et 26 µm et le D90 entre 51 et 53 µm. De façon avantageuse les analyses granulométriques par tamisage de ces poudres sont les suivantes :
- US standard tamis + 100 mesh : 0%
- US standard tamis - 100 +120 mesh : ≤0,2%, avantageusement 0% ;
- US standard tamis - 120 + 200 mesh : ≤0,5%, avantageusement 0% ;
- US standard tamis - 200 + 325 mesh : ≤7%, avantageusement 2-6% ;
- US standard tamis -325 mesh : ≥93%, avantageusement ≥94%, en particulier entre 94 et 98% ;

Cet additif a pour fonction de modifier la rhéologie de la résine réticulable (A) afin que la composition de résine réticulable selon l'invention soit un solide ductile à température ambiante. Il permet également d'améliorer la tenue en température de la composition et la tenue à la compression.

Le deuxième additif (C2) est constitué d'un thermoplastique. Avantageusement ce thermoplastique se trouve sous forme de poudre. De façon avantageuse, la résine thermoplastique est choisie parmi les polysulphones, les polyéthersulphones, les polyétherimides, le formal polyvinyle, le butyral polyvinyle, les polyéthylène oxydes, le nylon copolymérisé, l'ABS (Acrylonitrile butadiène styrène), les polyétheréthercétones (PEEK) et toutes les résines thermoplastiques bien connues de l'homme du métier ainsi que leurs mélanges. En particulier dans le cas où la résine réticulable (A) est une résine phénolique, il s'agit de l'ABS (Acrylonitrile butadiène styrène), d'une polyétheréthercétone (PEEK) ou de leurs mélanges. En particulier il s'agit d'un polyéthersulphone, par exemple le SUMIKAEXCEL 5003P ou Victrex 5003P commercialisés par la société Sumitomo. Les polyéthersulphones sont particulièrement avantageux lorsque la résine réticulable (A) est une résine époxy. Le thermoplastique (C2) a pour fonction d'apporter un comportement plastique à la composition de résine réticulable selon la présente invention et donc de lui permettre d'avoir une meilleure tenue aux chocs sans casser. Le thermoplastique (C2) peut être soluble ou non dans la résine réticulable (A), de façon avantageuse, il est soluble, en particulier sans l'aide d'un solvant complémentaire pour des raisons écologiques et de santé publique.

Le composant (C3) est un extenseur de chaîne pouvant réagir avec la résine réticulable (A) selon la présente invention, avantageusement avec une époxy lorsque la résine réticulable (A) est une résine époxy. Son rôle est d'accélérer la réaction de réticulation en cuisson de la composition solide ductile à température ambiante selon la présente invention et d'améliorer les propriétés mécaniques de la composition selon la présente invention après réticulation de la résine (A). Dans le cas où la résine réticulable (A) est une résine phénolique, le composant (C3) est absent de la composition selon la présente invention, car il est inutile. De façon avantageuse, l'extenseur de chaîne est un composé phénolique, en particulier un bisphénol tel que par exemple le bisphénol A, le bisphénol S, le bisphénol F, le bisphénol AD, le bisphénol Z, le dihydroxybiphényle, le fluorènebisphénol, ou le DHN (dihydroxynaphtalène). De façon avantageuse il s'agit du bisphénol A ou du DHN. Le DHN possède des avantages en termes de santé publique.

Le composant (C4) n'est pas obligatoirement présent dans la composition selon la présente invention. Il consiste en des particules ou fibres non métalliques organiques ou inorganiques. Il peut ainsi par exemple être choisi parmi des agents anti-fluages, des agents apportant de la résistance mécanique à la composition ou des agents diminuant la densité de la composition. Avantageusement il est choisi parmi les fibres de carbone courtes (longueur inférieure au millimètre, avantageusement d'environ 0,5 mm), les sphères de verre, les billes de silice ou leurs mélanges. Les fibres de carbone courtes, avantageusement en polyacrylonitrile, en particulier celles ayant L=0,5 mm, D= quelques µm, permettent d'apporter la résistance mécanique à la composition selon la présente invention. En particulier il peut s'agir de fibres de carbone Grafil 34-700 commercialisées par la société Grafil. Les sphères de verre permettent de diminuer la densité de la composition selon la présente invention. Les billes de silice permettent de diminuer le fluage de la composition solide ductile à température ambiante selon la présente invention lors de la réticulation. Les billes des silice peuvent être en dioxyde de silicium pyrogéné ou non pyrogéné, traité ou non traité. Il peut s'agir par exemple de la silice CARB-O-SIL® M5 dont la taille moyenne des particules sous forme d'agrégat est comprise entre 0,2 et 0,3 µm, commercialisée par la société CABOT. Avantageusement il s'agit d'un mélange de fibres de carbone courtes et de billes de silice.

Lorsque ce composant (C4) est présent dans la composition selon la présente invention, il est présent en une teneur comprise entre 0,1 et 10 % par rapport au poids total de la composition, avantageusement entre 1 et 6 %, de façon avantageuse entre 2 et 5 %.

En particulier l'agent anti-fluage, tel que les billes de silice, est présent dans la composition en une teneur comprise entre 1 et 5% en poids, avantageusement entre 2 et 4% en poids par rapport au poids total de la composition.

Avantageusement l'agent apportant la résistance mécanique à la composition, tel que les fibres de carbone courtes, est présent dans la composition en une teneur comprise entre 0,1 et 5% en poids, avantageusement entre 0,2 et 2% en poids par rapport au poids total de la composition.

Dans un mode de réalisation particulier, la composition de résine réticulable solide ductile à température ambiante selon la présente invention présente une viscosité comprise entre 200 et 2000 Pa.s à 80 °C, avantageusement entre 250 et 1800 Pa.s à 80 °C, de façon avantageuse entre 250 et 1680 Pa.s à 80 °C. La viscosité a été mesurée à l'aide de l'appareillage Rheometer TA Instrument AR 500 à plaques parallèles (diamètre 25 mm). Le système à plaques parallèles permet de mesurer la viscosité d'échantillons contenant des particules. On peut régler la distance de l'entrefer entre les deux plaques comme on le veut, ce qui élimine les problèmes dus à la taille des particules. En général les échantillons qui ont des particules ont besoin d'avoir un entrefer dont la distance est au moins 10 fois supérieure à la taille de la plus grande particule. Le logiciel de l'appareillage calcule les taux de contraintes et de cisaillement.

Les conditions utilisées pour mesurer la viscosité dans le cadre de la présente invention sont les suivantes :
10 % de contrainte ;
Fréquence 10 rad/sec ;
Entrefer : 1000 µm.

Dans un autre mode de réalisation particulier, la composition de résine réticulable solide ductile à température ambiante selon la présente invention a une température de réticulation par cuisson équivalente à celle de la structure composite dans laquelle elle sera introduite. En particulier la température de réticulation :
- dans le cas des résines époxy (si la résine (A) est une résine époxy) est comprise entre 170 et 190°C, avantageusement elle est de 180°C ;
- dans le cas des résines phénoliques (si la résine (A) est une résine phénolique) est comprise entre 150 et 170°C, avantageusement elle est de 160°C.

Dans encore un autre mode de réalisation particulier, la composition de résine réticulable solide ductile à température ambiante selon la présente invention se trouve sous la forme de joncs, de section adaptée à l'espace à combler. Avantageusement ces joncs ont une section comprise entre 9 et 22 mm², de façon avantageuse cette section à la forme d'un triangle, en particulier d'un triangle équilatéral ou d'un triangle isocèle rectangle. Les joncs peuvent avoir une longueur de quelques mètres, en particulier comprise entre 1 et 6m.

La présente invention concerne également un procédé de fabrication de la composition de résine réticulable solide ductile à température ambiante selon la présente invention qui consiste dans le mélange des constituants A, B, C, avantageusement à une température de 70 à 90°C, avantageusement de 80°C. Dans le cas où la composition de résine réticulable solide ductile à température ambiante selon la présente invention a la forme de joncs, le procédé comprend en outre l'extrusion, avantageusement à une température comprise entre 60 et 80°C, avantageusement de 70°C du mélange des constituants, sous la forme de joncs à section adaptée à l'espace à combler dans la structure composite. Les étapes de mélange des composants et d'extrusion peuvent être simultanées ou successives. Avantageusement, les étapes sont successives. La texture de la composition solide ductile à température ambiante selon la présente invention est telle que les joncs conservent leur forme après extrusion tout en restant malléables à température ambiante pour leur mise en place sur la structure composite. Les joncs extrudés de composition sous forme de solide ductile à température ambiante peuvent être disposés sur des baguettes à section contreformée à celle de la section du jonc (Voir figure 2). Ces joncs sont ensuite découpés selon la longueur voulue.

La présente invention concerne en outre l'utilisation de la composition de résine réticulable selon la présente invention pour le comblement des espaces vides d'une structure composite, avantageusement de tête de clou ou de demi-tête de clou d'une structure composite de panneaux raidis ou autoraidis.

Avantageusement la résine réticulable et l'éventuel agent de réticulation de la structure composite sont identiques à la résine réticulable (A) et à l'éventuel agent de réticulation (B) de la composition de résine réticulable selon la présente invention.

La mise en place de la composition de résine réticulable solide ductile à température ambiante dans les espaces à combler, têtes de clou ou demi-têtes de clou, sur la structure composite est réalisée par exemple selon les procédés décrits dans les demandes de brevets FR 2 863 198 et FR 2 863 197. On peut ainsi en particulier citer le procédé qui comprend les étapes suivantes:
- drapage d'une pluralité de plis superposés de fibres de carbone pré-imprégnées pour constituer la peau de base ;
- mise en place et formage sur des poinçons individuels à section en U et arêtes arrondies et de longueur correspondant à celle des raidisseurs en U du panneau à réaliser, d'au moins un pli de renfort en fibres de carbone pré-imprégnées ;
- réalisation par drapage d'au moins un pli de fibres de carbone pré-imprégnées de demi-clous constitués d'une bande de longueur correspondant à celle des raidisseurs en U et de largeur égale à la hauteur des branches dudit U et présentant un bord longitudinal tombé ;
- mise en place sur les deux flancs de chaque poinçon revêtu dudit pli de renfort et en position de U renversé, d'un demi-clou, les bords tombés étant placés à hauteur des arêtes arrondies des poinçons ;
- positionnement côte à côte des poinçons en position de U renversé et mise en place de tête de clou en composition de résine réticulable solide ductile à température ambiante de section sensiblement triangulaire entre deux bords tombés en regard ;
- compactage de l'ensemble des poinçons ainsi accolés ;
- retournement à 180° de l'ensemble des poinçons compactés ;
- positionnement de cet ensemble sur ladite peau de base en sorte de plaquer contre cette dernière une surface plane continue définie, d'une part, par la face externe des parties de liaison des branches des U et, d'autre part, par l'ensemble « clou + tête de clou » séparant deux raidisseurs en U adjacents ;
- et, enfin, retrait desdits poinçons en U.

On peut en outre en particulier citer le procédé qui comprend les étapes suivantes:
- drapage d'une pluralité de plis superposés de fibres de carbone pré-imprégnées pour constituer la peau de base ;
- mise en place et formage sur des poinçons individuels à section en U et arêtes arrondies et de longueur correspondant à celle des raidisseurs en U du panneau à réaliser, d'au moins un pli de renfort en fibres de carbone pré-imprégnées ;
- réalisation par drapage d'au moins un pli de fibres de carbone pré-imprégnées d'un clou constitué d'une bande de longueur correspondant à celle des raidisseurs en U et de largeur égale à la hauteur des branches dudit U;
- positionnement côte à côte des poinçons en position de U renversé avec interposition dudit clou ;
- mise en place de part et d'autre de chaque clou entre ce dernier et ledit pli de renfort de deux demi-têtes de clou en composition de résine réticulable solide ductile à température ambiante de section ayant la forme de section sensiblement triangulaire;
- compactage de l'ensemble des poinçons ainsi accolés ;
- retournement à 180° de l'ensemble des poinçons compactés ;
- positionnement de cet ensemble sur ladite peau de base en sorte de plaquer contre cette dernière une surface plane continue définie, d'une part, par la face externe des parties de liaison des branches des U des raidisseurs et, d'autre part, par l'ensemble « clou + tête de clou » séparant deux raidisseurs en U adjacent ;
- et, enfin, retrait desdits poinçons en U.

Après mise en place de la composition de résine réticulable selon la présente invention dans les espaces à combler d'une structure composite, l'ensemble est réticulé par cuisson, avantageusement
- dans le cas des résines époxy à une température comprise entre 170 et 190°C, encore plus avantageusement à une température de 180°C ;
- dans le cas des résines phénoliques à une température comprise entre 150 et 170°C, encore plus avantageusement à une température de 160°C, et la composition de résine réticulable selon la présente invention durcit par polymérisation de la résine, éventuellement avec l'agent de réticulation (B) et l'extenseur de chaîne (C3).

Lors de la cuisson, la composition selon la présente invention en réticulant occupe parfaitement l'espace à combler sans fluage excessif. Compte-tenu de la similitude chimique entre la composition réticulée ainsi obtenue et la structure composite, une éventuelle migration partielle d'un ou plusieurs constituants de la composition selon la présente invention dans la structure composite n'est pas problématique.

La présente invention concerne donc de plus la composition réticulée obtenue par réticulation de la composition de résine réticulable selon la présente invention.

Elle concerne également la structure composite incorporant la composition réticulée selon la présente invention, avantageusement ladite structure composite étant une structure composite drapée en fibres préimprégnées, de façon avantageuse une structure composite de panneaux raidis ou autoraidis.

Elle concerne enfin un procédé de fabrication de la structure composite incorporant la composition réticulée selon la présente invention caractérisé en ce qu'il comprend les étapes suivantes :
- mise en place de la composition de résine réticulable selon la présente invention dans les espaces à combler d'une structure composite, avantageusement dans les têtes de clou ou demi-têtes de clou d'une structure composite de panneaux raidis ou autoraidis ;
- réticulation simultanée de la résine (A) de la composition mise en place éventuellement avec l'agent de réticulation (B) et l'extenseur de chaîne (C3) et de la résine de la structure composite. En effet lorsque la résine (A) est une résine époxy, l'agent de réticulation (B) et l'extenseur de chaîne (C3) sont présents dans la composition selon la présente invention et la résine (A) va réticuler avec l'agent de réticulation (B) et l'extenseur de chaîne (C3) lors de cette étape ;
- récupération d'une structure composite dont les espaces ont été comblés.

En particulier cette mise en place se fait avant application de la peau sur la structure composite de panneaux raidis ou autoraidis. De façon avantageuse la réticulation a lieu à une température
- dans le cas des résines époxy, comprise entre 170 et 190°C, encore plus avantageusement à une température de 180°C ;
- dans le cas des résines phénoliques, comprise entre 150 et 170°C, encore plus avantageusement à une température de 160°C.

La présente invention sera mieux comprise à la lumière de la description des dessins et des exemples qui suivent.

La Figure 1 représente une section de jonc de la composition de résine réticulable solide ductile à température ambiante selon la présente invention après extrusion, préformée pour combler un espace en forme de tête de clou.

La Figure 2 représente un jonc de composition de résine réticulable solide ductile à température ambiante selon la présente invention après extrusion avec une section de tête de clou, disposé sur une baguette contreformée.

La Figure 3 représente un schéma d'implantation en coupe transversale partielle de la composition de résine réticulable solide ductile à température ambiante selon la présente invention dans un espace en forme de tête de clou sur une structure composite de panneaux raidis ou autoraidis avec des raidisseurs en forme de U.

La Figure 4 représente un schéma d'implantation en coupe transversale partielle de la composition de résine réticulable solide ductile à température ambiante selon la présente invention dans un espace en forme de demi-tête de clou dans une structure composite de panneaux raidis ou autoraidis avec des raidisseurs en forme de U.

### Exemples :

Les compositions suivantes de résine réticulable solide ductile à température ambiante selon la présente invention ont été mises en oeuvre :

**Exemple 1 :**

| **Composants** | **% en masse** | **Fonction** | **Fournisseur** |
|---|---|---|---|
| ARALDITE®MY 9512 | 51,8 | Résine époxy | HUNTSMAN |
| VICTREX 5003 P (PES) | 10,9 | Thermoplastique | SUMITOMO |
| POUDRE D'ALUMINIUM ATOMISE (catégorie 1233) | 26,9 | Charge métallique | ALCOA |
| DICY DYHARD® 100 S 10microns | 5,2 | Durcisseur | ALZCHEM |
| BISPHENOL A | 5,2 | Extenseur de chaîne | MOMENTIVE |

Viscosité : 380 Pa.s à 80°C (mesurée par le rhéomètre TA instrument AR 500 à plaques parallèles (diamètre 25 mm))
Densité : 1,4

**Exemple 2 :**

| **Composants** | **% en masse** | **Fonction** | **Fournisseur** |
|---|---|---|---|
| ARALDITE®MY 9512 | 49,7 | Résine époxy | HUNTSMAN |
| VICTREX 5003 P (PES) | 10,5 | Thermoplastique | SUMITOMO |
| POUDRE D'ALUMINIUM ATOMISE (catégorie 1233) | 25,9 | Charge métallique | ALCOA |
| DICY DYHARD® 100 S 10microns | 5,0 | Durcisseur | ALZCHEM |
| BISPHENOL A | 5,0 | Extenseur de chaîne | MOMENTIVE |
| CABOSIL M5 | 2,9 | Billes de silice | CABOT |
| GRAFIL 34-700 CARBON FIBER 0,5 MM SIZING 1.2% EPOXY | 1,0 | Fibre de carbone | GRAFIL |

Viscosité : 1670 Pa.s à 80°C (mesurée par le rhéomètre TA instrument AR 500 à plaques parallèles (diamètre 25 mm)).

**Exemple 3 :**

| **Composants** | **% en masse** | **Fonction** | **Fournisseur** |
|---|---|---|---|
| ARALDITE®MY 9512 | 52,5 | Résine époxy | HUNTSMAN |
| VICTREX 5003 P (PES) | 11,1 | Thermoplastique | SUMITOMO |
| POUDRE D'ALUMINIUM ATOMISE (catégorie 1233) | 27,4 | Charge métallique | ALCOA |
| DICY DYHARD® 100 S 10microns | 5,3 | Durcisseur | ALZCHEM |
| DHN | 3,7 | Extenseur de chaîne | SIGMA ALDRICH |

Viscosité : 760 Pa.s à 80°C (mesurée par le rhéomètre TA instrument AR 500 à plaques parallèles (diamètre 25 mm))

**Exemple 4 :**

| **Composants** | **% en masse** | **Fonction** | **Fournisseur** |
|---|---|---|---|
| ARALDITE®MY 9512 | 50,9 | Résine époxy | HUNTSMAN |
| VICTREX 5003 P (PES) | 10,7 | Thermoplastique | SUMITOMO |
| POUDRE D'ALUMINIUM ATOMISE (catégorie 1233) | 26,4 | Charge métallique | ALCOA |
| DICY DYHARD® 100 S 10microns | 5,1 | Durcisseur | ALZCHEM |
| DHN | 3,5 | Extenseur de chaîne | SIGMA ALDRICH |
| CABOSIL M5 | 2,9 | Billes de silice | CABOT |
| GRAFIL 34-700 CARBON FIBER 0,5 MM SIZING 1.2% EPOXY | 0,5 | Fibre de carbone | GRAFIL |

Viscosité : 270 Pa.s à 80°C (mesurée par le rhéomètre TA instrument AR 500 à plaques parallèles (diamètre 25 mm))

Les composants sont mélangés à 80°C et extrudés à 70°C dans une filière à plusieurs sections de sortie correspondant au profil de section de jonc recherché. On extrude ainsi plusieurs joncs de composition de résine réticulable solide ductile à température ambiante simultanément.

Pour les exemples 1 à 4:

| **Section préformée** | **Triangle équilatéral** | **Triangle isocèle à angle droit** - | |
|---|---|---|---|
| **Dimensions indicatives** | Δ 5 mm | 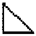 6,4 mm 4,5 mm | 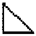 7,5 mm 5,3 mm |
| **Masse linéaire** | 15,5 ± 3 g/m | 12,5 ± 2 g/m | 17 ± 3 g/m |

On peut également obtenir comme illustré à la figure 1 un jonc (1) en composition de résine réticulable selon la présente invention ayant une section sensiblement triangulaire sous forme de triangle isocèle avec deux côtés de 4,51 mm et un côté de 5,6 mm. La masse linéaire de ce jonc est de 15,2 g/m.

Les joncs (1) selon la présente invention peuvent, comme illustré à la figure 2, être disposés sur des baguettes (2) à section contreformée à celle de la section du jonc, afin d'entreposer ces joncs avant leur utilisation.

Les joncs peuvent ensuite être mis en place dans des espaces à combler dans des structures composites telles que par exemple:
- des têtes de clous (1) comme illustré à la figure 3 de panneaux raidis ou auto raidis ayant des raidisseurs en forme de U (3) et une peau de base (4), lorsque la section du jonc est sensiblement triangulaire du type triangle isocèle ou triangle équilatéral.
- des demi-têtes de clou (5) comme illustré à la figure 4 de panneaux raidis ou auto raidis ayant des raidisseurs en forme de U (3), un clou (6) interposé entre ces raidisseurs et une peau de base (4), lorsque la section du jonc est sensiblement triangulaire du type triangle rectangle.

## Revendications

1. Composition de résine réticulable solide ductile à température ambiante comprenant :
- (A) une résine réticulable liquide à une température comprise entre 60 et 80°C;
- (B) un agent de réticulation éventuel; et
- (C) des additifs, lesdits additifs comprenant :
- (C1) une charge métallique solide sous forme de poudre ;
- (C2) un thermoplastique
- (C3) un extenseur de chaîne éventuel pouvant réagir avec la résine (A) ;
- (C4) éventuellement des particules ou fibres non métalliques organiques ou inorganiques ;
les additifs (C) représentant entre 20 et 55 % en masse de la composition, avantageusement entre 30 et 50 % en masse, de façon avantageuse entre 40 et 50 % en masse.

2. Composition selon la revendication 1 **caractérisée en ce qu'**elle comprend en masse par rapport à la masse totale de la composition, dans le cas où l'agent de réticulation (B) est présent :
- entre 44 et 71 % de résine réticulable (A), avantageusement entre 47 et 63 %, de façon avantageuse entre 46 et 54 % ;
- entre 1 et 9 % de l'agent de réticulation (B), avantageusement entre 3 et 7 % de façon avantageuse entre 4 et 6 %; et
- entre 20 et 55 % des additifs (C), avantageusement entre 30 et 50 % de façon avantageuse entre 40 et 50 %.

3. Composition selon l'une quelconque des revendications 1 ou 2 **caractérisée en ce que** lesdits additifs (C) comprennent en masse par rapport à la masse totale de la composition, dans le cas où l'extenseur de chaîne (C3) est présent :
- entre 14 et 35 % de la charge métallique (C1), avantageusement entre 21 et 30 %, de façon avantageuse entre 23 et 29 % ;
- entre 5 et 17 % du thermoplastique (C2), avantageusement entre 7 et 15 %, de façon avantageuse entre 8 et 14 %;
- entre 1 et 13 % de l'extenseur de chaîne (C3) pouvant réagir avec la résine (A), avantageusement entre 2 et 10 %, de façon avantageuse entre 3 et 8 %;
- entre 0 et 10 % des particules ou fibres non métalliques organiques ou inorganiques (C4), avantageusement entre 0 et 6 %, de façon avantageuse entre 0 et 5 %.

4. Composition selon l'une quelconque des revendications 1 à 3, **caractérisée en ce que** la résine réticulable (A) est une résine époxy et **en ce que** l'agent de réticulation (B) et l'extenseur de chaine (C3) sont présents.

5. Composition selon la revendication 4, **caractérisée en ce que** l'extenseur de chaîne (C3) pouvant réagir avec la résine (A) est choisi parmi le bisphénol A ou le dihydroxynaphtalène, avantageusement il s'agit du dihydroxynaphtalène.

6. Composition selon l'une quelconque des revendications 1 à 5, **caractérisée en ce que** la charge métallique solide est choisie parmi la poudre d'aluminium, de zinc, de cuivre, de fer, d'argent, de titane, leurs oxydes ou hydroxydes et leurs mélanges, avantageusement il s'agit de la poudre d'aluminium.

7. Composition selon l'une quelconque des revendications 1 à 6, **caractérisée en ce que** le thermoplastique (C2) est un polyéthersulphone.

8. Composition selon l'une quelconque des revendications 1 à 7, **caractérisée en ce que** les particules ou fibres non métalliques organiques ou inorganiques (C4) sont présentes et sont choisies parmi les fibres de carbone courtes, les sphères de verre, les billes de silice et leurs mélanges, avantageusement il s'agit d'un mélange de fibres de carbone courtes et de billes de silice.

9. Composition selon l'une quelconque des revendications 1 à 8 **caractérisée en ce que** sa viscosité, mesurée à 80 °C par un rhéomètre à plaques parallèles avec 10% de contraintes, une fréquence de 10 rad/sec et un entrefer de 1000 µm, est comprise entre 200 et 2000 Pa.s.

10. Composition selon l'une quelconque des revendications 1 à 9 **caractérisée en ce qu'**elle se trouve sous la forme de jonc de section comprise entre 9 et 22 mm², la section ayant avantageusement la forme d'un triangle équilatéral ou d'un triangle isocèle rectangle.

11. Composition réticulée **caractérisé en ce qu'**elle est obtenue par réticulation de la composition selon l'une quelconque des revendications 2 à 6, 8 et 10.

12. Utilisation de la composition selon l'une quelconque des revendications 1 à 10 pour le comblement des espaces vides d'une structure composite, avantageusement de tête de clou ou de demi-tête de clou d'une structure composite de panneaux raidis ou autoraidis.

13. Structure composite incorporant la composition réticulée selon la revendication 11, avantageusement ladite structure composite étant une structure composite de panneaux autoraidis.

14. Procédé de fabrication de la structure composite selon la revendication 13 **caractérisé en ce qu'**il comprend les étapes suivantes :
- mise en place de la composition selon l'une quelconque des revendications 1 à 10 dans les espaces à combler d'une structure composite, avantageusement dans les têtes de clou ou demi-têtes de clou d'une structure composite de panneaux raidis ou autoraidis,
- réticulation simultanée de la résine (A) de la composition mise en place, éventuellement avec l'agent de réticulation (B) et l'extenseur de chaîne (C3), et de la résine de la structure composite,
- récupération d'une structure composite dont les espaces ont été comblés.

## Patentansprüche

1. Feste, vernetzbare Harzzusammensetzung, die bei Umgebungstemperatur duktil ist, umfassend:
- (A) ein vernetzbares Harz, das bei einer Temperatur zwischen 60 und 80 °C flüssig ist,
- (B) ein optionales Vernetzungsmittel und
- (C) Additive, wobei die Additive umfassen:
- (C1) eine feste metallische Ladung in Form eines Pulvers,
- (C2) einen Thermoplast,
- (C3) einen optionalen Kettenverlängerer, der mit dem Harz (A) reagieren kann,
- (C4) optional nicht metallische, organische oder anorganische Partikel oder Fasern,
wobei die Additive (C) zwischen 20 und 55 Massen-% der Zusammensetzung darstellen, bevorzugt zwischen 30 und 50 Massen-%, noch bevorzugter zwischen 40 und 50 Massen-%.

2. Zusammensetzung nach Anspruch 1, **dadurch gekennzeichnet, dass** sie in Bezug auf die gesamte Masse der Zusammensetzung in dem Fall, dass das Vernetzungsmittel (B) vorliegt, nach Masse umfasst:
- zwischen 44 und 71 % vernetzbares Harz (A), bevorzugt zwischen 47 und 63 %, noch bevorzugter zwischen 46 und 54 %,
- zwischen 1 und 9 % Vernetzungsmittel (B), bevorzugt zwischen 3 und 7 %, noch bevorzugter zwischen 4 und 6 %, und
- zwischen 20 und 55 % Additive (C), bevorzugt zwischen 30 und 50 %, noch bevorzugter zwischen 40 und 50 %.

3. Zusammensetzung nach einem der Ansprüche 1 oder 2, **dadurch gekennzeichnet, dass** die Additive (C) in Bezug auf die gesamte Masse der Zusammensetzung in dem Fall, dass der Kettenverlängerer (C3) vorliegt, nach Masse umfassen:
- zwischen 14 und 35 % metallische Ladung (C1), bevorzugt zwischen 21 und 30 %, noch bevorzugter zwischen 23 und 29 %,
- zwischen 5 und 17 % Thermoplast (C2), bevorzugt zwischen 7 und 15 %, noch bevorzugter zwischen 8 und 14 %;
- zwischen 1 und 13 % Kettenverlängerer (C3), der mit dem Harz (A) reagieren kann, bevorzugt zwischen 2 und 10 %, noch bevorzugter zwischen 3 und 8 %;
- zwischen 0 und 10 % nicht metallische, organische oder anorganische Partikel oder Fasern (C4), bevorzugt zwischen 0 und 6 %, noch bevorzugter zwischen 0 und 5 %.

4. Zusammensetzung nach einem der Ansprüche 1 bis 3, **dadurch gekennzeichnet, dass** das vernetzbare Harz (A) ein Epoxidharz ist und dass das Vernetzungsmittel (B) und der Kettenverlängerer (C3) vorliegen.

5. Zusammensetzung nach Anspruch 4, **dadurch gekennzeichnet, dass** der Kettenverlängerer (C3), der mit dem Harz (A) reagieren kann, aus Bisphenol A oder Dihydroxynaphtalen ausgewählt ist, und es sich bevorzugt um Dihydroxynaphtalen handelt.

6. Zusammensetzung nach einem der Ansprüche 1 bis 5, **dadurch gekennzeichnet, dass** die feste metallische Ladung aus Aluminium, Zink, Kupfer, Eisen, Silber, Titan, deren Oxiden oder Hydroxiden und deren Mischungen in Pulverform ausgewählt ist, und es sich bevorzugt um Aluminiumpulver handelt.

7. Zusammensetzung nach einem der Ansprüche 1 bis 6, **dadurch gekennzeichnet, dass** der Thermoplast (C2) ein Polyethersulfon ist.

8. Zusammensetzung nach einem der Ansprüche 1 bis 7, **dadurch gekennzeichnet, dass** die nicht metallischen, organischen oder anorganischen Partikel oder Fasern (C4) vorliegen und aus kurzen Karbonfasern, Glasperlen, Siliziumdioxidkügelchen und deren Mischungen ausgewählt sind, und es sich bevorzugt um eine Mischung aus kurzen Karbonfasern und Siliziumdioxidkügelchen handelt.

9. Zusammensetzung nach einem der Ansprüche 1 bis 8, **dadurch gekennzeichnet, dass** ihre Viskosität, gemessen bei 80 °C durch ein Rheometer mit parallelen Platten mit 10 % Belastung, bei einer Frequenz von 10 rad/s und einem Spalt von 1000 µm, zwischen 200 und 2000 Pa.s beträgt.

10. Zusammensetzung nach einem der Ansprüche 1 bis 9, **dadurch gekennzeichnet, dass** sie in der Form eines Strangs mit einem Querschnitt von zwischen 9 und 22 mm² vorliegt, wobei der Querschnitt bevorzugt die Form eines gleichseitigen Dreiecks oder eines rechtwinkligen gleichschenkligen Dreiecks aufweist.

11. Vernetzte Zusammensetzung, **dadurch gekennzeichnet, dass** sie durch Vernetzung der Zusammensetzung nach einem der Ansprüche 2 bis 6, 8 und 10 erhalten wird.

12. Verwendung der Zusammensetzung nach einem der Ansprüche 1 bis 10, zur Füllung von Leerräumen einer Verbundstruktur, bevorzugt nagelkopf- oder halbnagelkopfförmiger Leerräume einer Verbundstruktur von versteiften oder selbstversteiften Platten.

13. Verbundstruktur, welche die vernetzte Zusammensetzung nach Anspruch 11 enthält, wobei die Verbundstruktur bevorzugt eine Verbundstruktur von selbstversteiften Platten ist.

14. Verfahren zur Herstellung der Verbundstruktur nach Anspruch 13, **dadurch gekennzeichnet, dass** es die folgenden Schritte umfasst:
- Auftrag der Zusammensetzung nach einem der Ansprüche 1 bis 10 in zu füllenden Räumen einer Verbundstruktur, bevorzugt in Nagelköpfen oder Halbnagelköpfen einer Verbundstruktur von versteiften oder selbstversteiften Platten,
- gleichzeitige Vernetzung des Harzes (A) der aufgetragenen Zusammensetzung, optional mit dem Vernetzungsmittel (B) und dem Kettenverlängerer (C3), und des Harzes der Verbundstruktur,
- Erhalt einer Verbundstruktur, deren Leerräume gefüllt wurden.

## Claims

1. Solid crosslinkable resin composition that is ductile at room temperature, comprising:
- (A) a crosslinkable resin that is liquid at a temperature of between 60 and 80°C;
- (B) an optional crosslinking agent; and
- (C) additives, said additives comprising:
- (C1) a solid metal filler in powder form;
- (C2) a thermoplastic;
- (C3) an optional chain extender that can react with the resin (A);
- (C4) optionally, organic or inorganic non-metallic particles or fibers;
the additives (C) representing between 20 and 55% by mass of the composition, advantageously between 30 and 50% by mass, advantageously between 40 and 50% by mass.

2. Composition as claimed in claim 1, **characterized in that** it comprises by mass relative to the total mass of the composition, in the case where the crosslinking agent (B) is present:
- between 44 and 71% of crosslinkable resin (A), advantageously between 47 and 63%, advantageously between 46 and 54%;
- between 1 and 9% of the crosslinking agent (B), advantageously between 3 and 7%, advantageously between 4 and 6%; and
- between 20 and 55% of additives (C), advantageously between 30 and 50%, advantageously between 40 and 50%.

3. Composition as claimed in any one of claims 1 or 2, **characterized in that** said additives (C) comprise by mass relative to the total mass of the composition, in the case where the chain extender (C3) is present:
- between 14 and 35% of the metallic filler (C1), advantageously between 21 and 30%, advantageously between 23 and 29%;
- between 5 and 17% of the thermoplastic (C2), advantageously between 7 and 15%, advantageously between 8 and 14%;
- between 1 and 13% of the chain extender (C3) that can react with resin (A), advantageously between 2 and 10%, advantageously between 3 and 8%;
- between 0 and 10% of organic or inorganic non-metallic particles or fibers (C4), advantageously between 0 and 6%, advantageously between 0 and 5%.

4. Composition as claimed in any one of claims 1 to 3, **characterized in that** the crosslinkable resin (A) is an epoxy resin and **in that** the crosslinking agent (B) and the chain extender (C3) are present.

5. Composition as claimed in claim 4, **characterized in that** the chain extender (C3) that can react with the resin (A) is chosen from bisphenol A or dihydroxynaphthalene, and is advantageously dihydroxynaphthalene.

6. Composition as claimed in any one of claims 1 to 5, **characterized in that** the solid metallic filler is chosen from aluminum, zinc, copper, iron, silver or titanium powder, oxides or hydroxides thereof and mixtures thereof, and is advantageously aluminum powder.

7. Composition as claimed in any one of claims 1 to 6, **characterized in that** the thermoplastic (C2) is a polyethersulfone.

8. Composition as claimed in any one of claims 1 to 7, **characterized in that** the organic or inorganic non-metallic particles or fibers (C4) are present and are chosen from short carbon fibers, glass spheres, silica beads and mixtures thereof, and is advantageously a mixture of short carbon fibers and of silica beads.

9. Composition as claimed in any one of claims 1 to 8, **characterized in that** its viscosity, measured at 80°C with a parallel-plate rheometer with 10% stress, a frequency of 10 rad/sec and a gap of 1000 µm, is between 200 and 2000 Pa.s.

10. Composition as claimed in any one of claims 1 to 9, **characterized in that** it is in the form of a rod with a cross section of between 9 and 22 mm², the cross section advantageously having the form of an equilateral triangle or a right-angled isosceles triangle.

11. Crosslinked composition, **characterized in that** it is obtained by crosslinking the composition as claimed in any one of claims 2 to 6, 8 and 10.

12. Use of the composition as claimed in any one of claims 1 to 10, for filling empty spaces of a composite structure, advantageously a nail head or nail half-head of a composite structure of stiffened or self-stiffened panels.

13. Composite structure incorporating the crosslinked composition as claimed in claim 11, said composite structure advantageously being a composite structure of self-stiffened panels.

14. Process for manufacturing the composite structure as claimed in claim 13, **characterized in that** it comprises the following steps:
- putting the composition as claimed in any one of claims 1 to 10 into the spaces to be filled of a composite structure, advantageously into the nail heads or nail half-heads of a composite structure of stiffened or self-stiffened panels,
- simultaneous crosslinking of resin (A) of the composition, optionally with the crosslinking agent (B) and the chain extender (C3), and of the resin of the composite structure,
- recovery of a composite structure whose spaces have been filled.
